# EUROPÄISCHE PATENTSCHRIFT

(11) **EP 0 935 509 B1**
(45) Veröffentlichungstag und Bekanntmachung des Hinweises auf die Patenterteilung: **19.06.2002**
(21) Anmeldenummer: 97942752.3
(22) Anmeldetag: 15.10.1997
(51) Int. Cl.: B23G 1/34

(54) **STEUERBARER WERKZEUGHALTER**
STEERABLE TOOLHOLDER
PORTE-OUTIL POUVANT ETRE ORIENTE

(30) Priorität: 29.10.1996 CH 265996
(43) Veröffentlichungstag der Anmeldung: 18.08.1999
(73) Patentinhaber: Gafner, Rudolf, 6221 Rickenbach (CH)
(72) Erfinder: Gafner, Rudolf, 6221 Rickenbach (CH)
(74) Vertreter: Patentanwälte Feldmann & Partner AG
(86) Internationale Anmeldenummer: CH9700389
(87) Internationale Veröffentlichungsnummer: WO9818589

(56) Entgegenhaltungen:
- EP-A- 0 237 035
- DE-A- 2 516 775
- FR-E- 20 456
- US-A- 4 125 057

## Beschreibung

Die Erfindung betrifft einen Werkzeughalter nach dem Oberbegriff des unabhängigen Patentanspruches.

Bisher werden beispielsweise Innengewinde normalerweise durch Bohren und anschliessendes Einschneiden respektive eindrehen des Innengewindes hergestellt. Dies benötigt immer zwei Arbeitsvorgänge hintereinander. Das entstandene Gewinde weist dabei immer die Eigenschaften eines geschnittenen Gewindes auf. Es ist von der Herstellung von Aussengewinden her bekannt, dass man beispielsweise eine bedeutend grössere Herstellungsgeschwindigkeit erreichen kann, wenn das Gewinde durch Fräsen erzeugt wird. Grössere und Aussengewinde werden durch Drehen oder Fräsen auf Drei-Achsen Maschinen in drei Umgängen hergestellt und weisen oft Geometriefehler in der Rundheit auf.

Aus der den nächskommenden Stand der Technik beschreibenden DE-A-25 16 775 (D1) ist ein Werkzeughalter mit zwei konzentrischen Wellen bekannt. Eine Werkzeugaufnahme für einen Gewindefräser ist schwenkbar an einem Arm angeordnet. Dieser Arm wird mittels einem Schneckengetriebe um einen voreinstellbaren Betrag ausgeschwenkt. Das Werkzeug (Gewindefräser) wird über dieses Getriebe in der Werkzeugaufnahme um seine eigene Achse gedreht. Gleichzeitig wird der gesamte Werkzeughalter um seine Achse gedreht. So umfährt dann der Fräser tatsächlich während der Fräsarbeit eine kreisförmige Bahn, welche bei gleichzeitigem koordinierten Vorschub ein Fräsen eines Gewindes ermöglicht. Die beiden konzentrischen Wellen im Werkzeughalter sind miteinander mittels einem Getriebe mit festem Ubersetzungsverhältnis verbunden. Angetrieben wird der Werkzeughalter mit einer gemeinsamen Antriebswelle eines Werkzeugantriebes.

Die Erfindung stellt sich die Aufgabe, eine Werkzeugaufnahme zu schaffen welche erlaubt ein Fräswerkzeug oder ein Gewinderollwerkzeug so einzuspannen und zu betreiben, dass damit auch ein Innengewinde gefräst oder gerollt werden kann. Dabei sollen Geometriefehler vermeidbar sein.

Diese Aufgabe wird durch die in Patentanspruch 1 angegebene Erfindung gelöst.

Ein zusätzlicher Vorteil der Erfindung ist, dass mit dem erfindungsgemässen Werkzeughalter nun sogar Innensacklöcher auch Grundlochbohrungen genannt, beispielsweise in eine Hohlwelle fräsbar sind. Dies ermöglicht ganz neue Konstruktionen, da ein Sackloch hinten im Bereich seines geschlossenen Endes einen grösseren Durchmesser aufweisen kann als im nach aussen offenen vorderen Bereich.

Ein weiterer Vorteil der Erfindung besteht darin, dass ein eingespanntes Werkzeug während des Betriebes verstellbar und justierbar ist.

Der erfindungsgemässe Werkzeughalter wird nachstehend im Zusammenhang mit den Zeichnungen beschrieben. Es zeigen:
Figur 1 zeigt einen erfindungsgemäßen Werkzeughalter im Längsschnitt
Figur 2 den Werkzeughalter im Querschnitt im Bereich A - A;
Figur 3 den Werkzeughalter in einer anderen Auslenkungseinrichtung im Querschnitt;
Figur 4 eine mögliche Grundlochbohrung im Querschnitt;
Figur 5 eine weitere Version des Werkzeughalters mit erweiterter Funktionsmöglichkeit im Längsschnitt;
   und
Figur 6 in Ansicht derselben im Schnitt A - A.

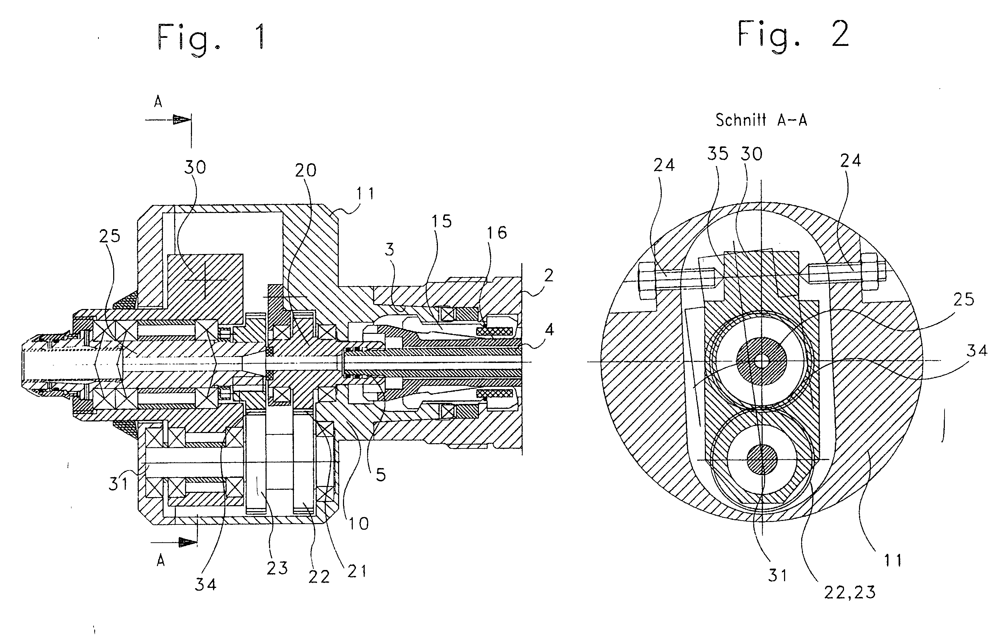

Gut ersichtlich aus der Figur 1 ist die Grundlage für den erfindungsgemässen Werkzeughalter 1, nämlich ein geeigneter Antrieb für eine Werkzeugmaschine. Er besteht aus einer äusseren hohlen Antriebswelle 2 und einer inneren konzentrisch in der äusseren angeordneten Antriebswelle 4. Die äussere Antriebswelle 2 ist mit einer Aufnahme für einen ersten Adapter wie üblich ausgerüstet. Die innere Antriebswelle 4 ist konzentrisch durch die hohle äussere Antriebswelle 2 geführt. Sie kann in bezug auf ihre Drehzahl synchron oder asynchron zur äusseren Antriebswelle betrieben werden. Die innere Antriebswelle 4 kann ebenfalls eine Hohlwelle sein. Ihr Hohlraum kann dann als Zuleitung für Kühlmittel, Schmiermittel und oder Druckluft zum Werkzeug benützt werden.

Als Antrieb eignen sich Elektromotoren mit konzentrischen Antriebswellen, das heisst dass die Antriebswelle eines ersten Elektromotores konzentrisch durch eine hohle Antriebswelle eines zweiten Elektromotores hindurchgeführt ist. Solche Motoren sind auch unter dem Begriff Kaskadenmotoren bekannt. Aehnliche Antriebe sind auch in Form eines reinen Getriebes mit zwei konzentrischen Antriebswellen bekannt

Beispiele für Antriebe mit zwei konzentrischen Antriebswellen sind beispielsweise ein Zweiwellenantrieb, beschrieben im SMM Nr. 20/1995, Seiten 94,95 (Ellen-Christine Reiff). Eine andere Version eines derartigen Antriebes stellt die Kopplung durch zwei hintereinander gelagerte Elektromotoren dar. Dies ist im Patent CH 682891 (Garu AG) beschrieben. Beide haben eine äussere und eine innere Antriebswelle, welche abhängig oder unabhängig voneinander angetrieben sein können. Sie können auch über ein Getriebe miteinander gekoppelt sein.

Ein Werkzeughalter 1 gemäss Erfindung hat einen, eine erste konzentrische Werkzeugaufnahme 3 aufweisenden, ersten Adapter 10. Dieser ist mittels einem Spannsystem 15 mit einem Spannstück 16 in einer Werkzeugaufnahme 3 der äusseren Antriebswelle 2 lösbar gehalten. Ein zweiter Adapter 20 befindet sich konzentrisch in der ersten Werkzeugaufnahme 3 des ersten Adapters 10. Er ist gegenüber diesem drehbar gelagert gehalten. Der zweite Adapter 20 umfasst eine zweite Werkzeugaufnahme 25, welche am ersten Adapter 10 mittels einem Schwenkelement 30 um eine exzentrisch und parallel zu den konzentrischen Antriebsachsen 2,4 angeordnete Schwenkachse 31 auslenkbar gelagert ist. Dabei steht der zweite Adapter 20 in lösbarer Verbindung mit der inneren konzentrischen Antriebswelle 4, welche das Spannstück 16 durchdringt. Dazu eignet sich beispielsweise Verbindung mittels einer Oldham-Kupplung oder auch einfach mittels einem Innensechskant am Adapter 20 zum Eingriff an einem Aussensechskant 5 an der inneren konzentrischen Welle 4.

Die zweite Werkzeugaufnahme 25 ist mittels eines Getriebes bestehend aus den Zahnrädern 22,23,34 und dem radial aussen als Zahnrad 21 ausgestalteten Adapter 20 antreibbar. Vom Zahnrad 21 wird ein zweites Zahnrad 22, welches zusammen und fest verbunden mit einem dritten Zahnrad 23 an einer Drehachse exzentrisch am ersten Adapter 10 gelagert ist, angetrieben, worauf das dritte Zahnrad 23 wiederum ein viertes Zahnrad 34 antreibt. Das vierte Zahnrad 34 ist fest mit der zweiten Werkzeugaufnahme 25 verbunden. Die Drehachse des zweiten und dritten Zahnrades 22,23 bildet gleichzeitig eine Schwenkachse 31 für ein Schwenkelement 30. Das Schwenkelement 30 wiederum stellt die Führung und Halterung für die zweite Werkzeugaufnahme 25. Die Schwenkachse 31 ist daher parallel und im Abstand von den beiden konzentrischen Wellen 2,4.

Die zweite Werkzeugaufnahme 25 ist somit von der inneren konzentrischen Welle antreibbar. Der Antrieb erfolgt über den zweiten Adapter 20 mittels des Getriebes 21,22,23,34. Das Getriebe besteht aus einem Zahnkranz auf dem zweiten Adapter 20, welcher somit ein erstes Zahnrad 21 bildet. Dieses ist mit einem zweiten Zahnrad 22 im Eingriff. Das zweite Zahnrad 22 ist mit einem dritten Zahnrad 23 auf der gleichen Welle fest verbunden. Diese Welle bildet gleichzeitig die Schwenkachse 31 für das Schwenkelement 30. Das dritte Zahnrad 23 ist nun wiederum im Eingriff mit einem vierten Zahnrad 34, welches fest verbunden ist mit der zweiten Werkzeugaufnahme 25. Es ist offensichtlich, dass statt diesem Getriebe mit den verschiedenen Zahnrädern die Kraftübertragung mit andern Mitteln, wie beispielsweise mit Zahnriemen, erfolgen kann. Auf jeden Fall kann somit die zweite Werkzeugaufnahme 25 von der inneren Antriebswelle 4 angetrieben werden unabhängig vom Auslenkungszustand.

Um die Lage Schwenkelementes 30 durchzuführen und zu Begrenzen sind Mittel zum Auslenken vorgesehen. In der in Figur 2 dargestellten Ausführung weist das Schwenkelement 30 beidseitig im, der Schwenkachse 31 gegenüberliegenden Bereich, Anschläge 35 auf. Am und im Gehäuse des ersten zylindrischen Körper 11 des ersten Adapters 10 sind Verstellelemente 24 so angeordnet, dass sie mit ihren Enden mit den Anschlägen 35 zusammenwirken und dadurch die Auslenkung des Schwenkelementes 30 bestimmen und begrenzen und dieses in der gewünschten Stellung arretieren. Diese Verstellelemente 24 können gewöhnlich Schrauben mit Gewinde sein. Alternativ wird ein, das Schwenkelement mindestens teilweise durchstossender, Gewindebolzen verwendet.

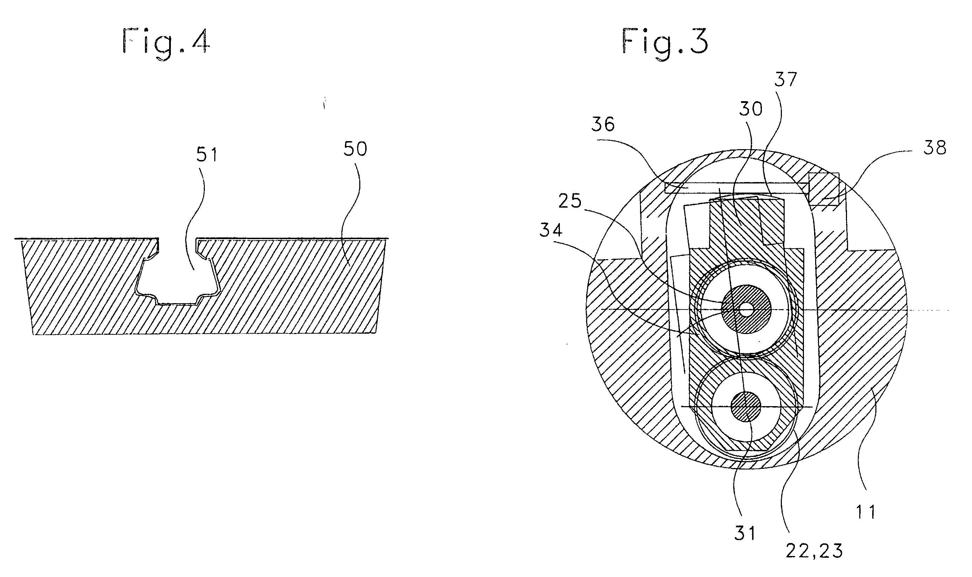

Eine Ausführung mit einem Schneckengetriebe zur Auslenkung des Schwenkelementes 30 ist in der Figur 3 dargestellt. Ein steuerbarer Mikromotor 38 oder Schrittmotor kann im ersten Adapter 10 eingebaut werden. Dabei treibt der Mikromotor 38 oder Schrittmotor eine Schneckenwelle 36 an, welche mit entsprechenden Zähnen 37 am Schwenkelement radial aussen am Schwenkelement im Eingriff steht. Diese Ausführungsform ermöglicht ein kontrolliertes Ausschwenken ohne Unterbrechung während der Bearbeitung eines Werkstückes durchzuführen. Die Steuerung kann von aussen bewirkt werden. Die nötigen elektrischen Zuleitungen können beispielsweise durch die Hohlwelle geführt werden und mittel Schleifringen übertragen werden. Damit wird die Auslenkung auch während dem Betrieb steuerbar und justierbar.

Ein Beispiel für eine nun fräsbare Grundlochbohrung ist in der Figur 4 gezeigt. Gut ersichtlich ist, dass die Grundlochbohrung nach einem Durchstich durch die Oberfläche mit kleinerem Druchmesser nach unten erweitert werden kann. Dabei kann je nach Fräskopfeinsatz annähernd ein beliebiges Profil hergestellt werden. Die einzige Begrenzung ergibt sich dabei durch den Durchmesser und die Form des Fräskopfes selbst.

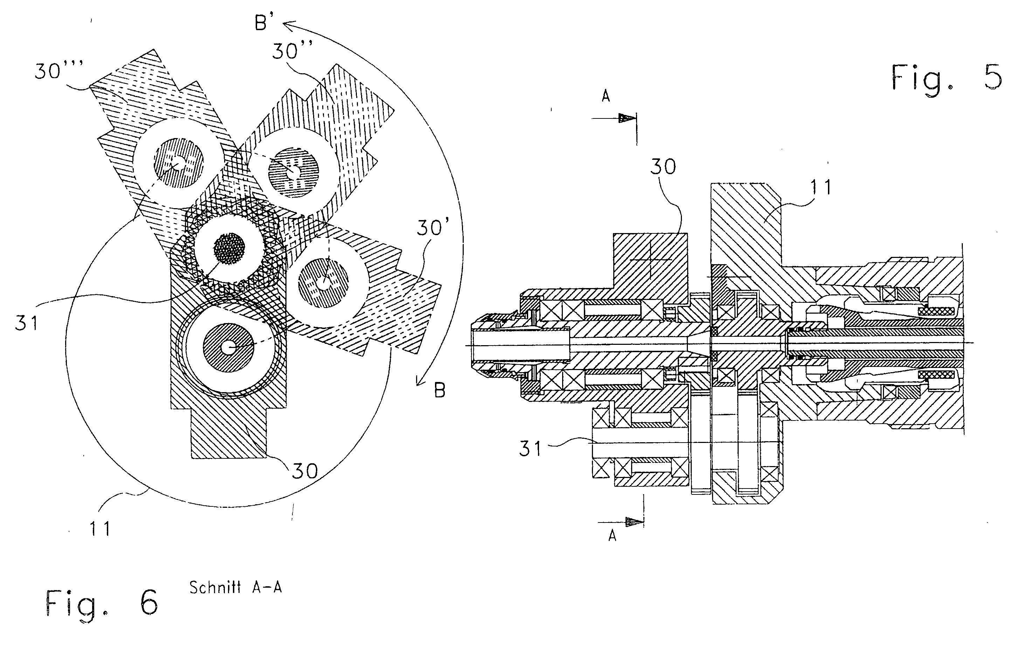

Eine andere oder in ihrer Funktionsmöglichkeit erweiterte Version des steuerbaren Werkzeughalters ist in der Figur 5 im Längsschnitt und in der Figur 6 in Ansicht geschnitten in A - A dargestellt. Diese besteht darin, dass auch die zweite Werkzeugaufnahme 25 zusammen mit der ersten Werkzeugaufnahme über den ersten Adapter 10 von der äusseren konzentrischen Welle 2 angetrieben wird. Somit dreht ein in die zweite Werkzeugaufnahme 25 eingespanntes Werkzeug mit der Geschwindigkeit des ersten Adapters 10. Der Antrieb des zweiten Adapters 20 dreht normalerweise synchron mit. Diese Version weist keine Verstellelemente 24 für die Auslenkung des Schwenkelementes 30 und somit für die Einstellung der Exzentrizität der zweiten Werkzeugaufnahme 25 auf. Dies geschieht nun über das Getriebe mit den Zahnrädern 21-23,34 und zwar folgendermassen. Solange-der äussere konzentrische Antrieb 2 und der innere konzentrische Antrieb 4 synchron, das heisst mit gleicher Drehgeschwindigkeit gleichsinnig drehen, bleibt der Auslenkungszustand konstant. Wird nun kurzfristig die Drehgeschwindigkeit des inneren konzentrischen Antriebes 4 etwas verkleinert oder vergrössert, so wird das Schwenkelement 30 mittels des Getriebes ausgelenkt, da die Differenz der Drehgeschwindigkeiten, also die Relativbewegung der beiden Antriebe zueinander, dieses Getriebe treibt. Somit umfassen die Mittel zum Auslenken des Schwenkelementes 31 den zweiten Adapter 20 und das Getriebe aus den Zahnrädern 21,22,23,34 selbst und es werden keine weiteren Elemente dazu benötigt. Auf diese Weise kann während dem Bearbeiten eines Werkstückes die Exzentrizität der zweiten Werkzeugaufnahme kontrolliert verstellt werden. Dies ist sehr einfach mittels einem der erwähnten Kaskadenmotoren zu erreichen, da deren Antriebswellen einzeln und unabhängig steuerbar sind. Es ist offensichtlich, dass das Gehäuse 11 des ersten Adapters nicht nach vorne bis über das Schwenkelement 30 gezogen ist. Dadurch wird ermöglicht, dass das Schwenkelemente 30 sogar um 360° um die Schwenkachse 31 in den Richtungen B - B' drehen kann. Es nimmt dann beispielsweise die dargestellten Stellungen 30, 30', 30", 30''' ein. Diese Drehbewegung kann während der eigentlichen Bearbeitung eines Werkstückes, also während dem Betrieb, wie oben beschrieben simultan und kontinuierlich erfolgen.

## Patentansprüche

1. Werkzeughalter (1) zur Verwendung mit einem Werkzeugantrieb , welcher eine äussere (2) und eine innere, konzentrische (4) Antriebswelle aufweist, wobei der Werkzeughalter (1) einen, eine erste konzentrische Werkzeugaufnahme (3) aufweisenden ersten Adapter (10), welcher mittels einem Spannsystem (15) mit einem Spannstück (16) in der ersten Werkzeugaufnahme (3) der äusseren Antriebswelle (2) lösbar gehalten ist, umfasst, und wobei ein zweiter Adapter (20) konzentrisch in der ersten Werkzeugaufnahme (3) des ersten Adapter (10), gegenüber diesem drehbar gelagert gehalten ist und wobei der zweite Adapter (20) eine zweite Werkzeugaufnahme (25) aufweist, welche am ersten Adapter (10) mittels eines Schwenkelementes (30) um eine exzentrisch und parallel zu den konzentrischen Antriebsachsen (2,4) angeordnete Schwenkachse (31) auslenkbar gelagert ist, **dadurch gekennzeichnet, dass** die zweite Werkzeugaufnahme (25) über den ersten Adapter (10) von der äusseren konzentrischen Welle (2) antreibbar ist und dass die Mittel zum Auslenken des Schwenkelementes (30) den zweiten. Adapter (20) und ein Getriebe (21,22,23,34) umfassen und dass das Auslenken des Schwenkelementes (31) durch kurzfristiges Verändern der Drehgeschwindigkeit der inneren konzentrischen Welle (2) gegenüber der äusseren konzentrischen Welle (6) betätigbar ist.

2. Werkzeughalter nach Anspruch 1, **dadurch gekennzeichnet, dass** der zweite Adapter (20) mit der inneren konzentrischen Antriebswelle (4) des Werkzeugantriebes verbindbar ist.

3. Werkzeughalter nach Anspruch 2, **dadurch gekennzeichnet, dass** am ersten Adapter (10) Verstellemente und am Schwenkelement (31) Anschläge (35), zur Begrenzung der Auslenkung des Schwenkelementes (31), angeordnet sind.

4. Werkzeughalter nach Anspruch 3, **dadurch gekennzeichnet, dass** die zweite Werkzeugaufnahme (25) uber den zweiten Adapter (20) mittels des Getriebes (21,22,23,34) von der inneren konzentrischen Welle (4) antreibbar ist.

5. Werkzeughalter nach Anspruch 8, **dadurch gekennzeichnet, dass** die Mittel zum Auslenken des Schwenkelementes (31) den zweiten Adapter (20) und das Getriebe (21,22,23,34) umfassen.

## Claims

1. A tool holder (1) for use with a tool drive device, having an exterior (2) and an interior concentric (4) driveshaft, wherein the tool holder (1) includes a first adapter (10), having a first concentric tool receptacle (3), which is releasably held by means of a clamping system (15) with a clamping element (16) in a first tool receptacle (3) of the exterior driveshaft (2), and wherein a second adapter (20) is concentrically held in the first tool receptacle (3) of the first adapter (10) in a manner rotatable in relation to the latter, and that the second adapter (20) has a second tool receptacle (25), which is seated on the first adapter (10) so it can be deflected by means of a pivot element (30) around a pivot shaft (31), which is arranged eccentrically and parallel with the concentric driveshafts (2, 4), **characterized in that** the second tool receptacle (25) can be driven by the exterior eccentric shaft (2) via the first adapter (10), and that the means for deflecting the pivot element (31) include the second adapter (20) and a gear (21, 22, 23, 34), that the deflection of the pivot element (31) can be actuated by a brief change of the revolving speed of the interior concentric shaft (2) in respect to the exterior concentric shaft (6).

2. The tool holder in accordance with claim 1, **characterized in that** the second adapter (20) can be connected with the interior concentric driveshaft (4) of the tool drive.

3. The tool holder in accordance with claim 2, **characterized in that** adjusting elements are arranged on the first adapter (10), and stops (35) on the pivot element (31), for limiting the deflection of the pivot element (31).

4. The tool holder in accordance with claim 3, **characterized in that** the second tool receptacle (25) can be driven by the interior concentric shaft (4) via the second adapter (20) by means of the gear (21, 22, 23, 34).

5. The tool holder in accordance with claim 4, **characterized in that** the means for deflecting the pivot elements (31) include the second adapter (20) and the gear (21, 22, 23, 34).

## Revendications

1. Porte-outil (1) pour utilisation avec un entraînement d'outil, lequel présente un arbre d'entraînement extérieur (2) et un arbre d'entraînement intérieur concentrique (4), le porte-outil (1) comprenant un premier adaptateur (10) présentant un premier raccordement d'outil (3) concentrique, lequel adaptateur est maintenu dans le premier raccordement d'outil (3) de l'arbre d'entraînement (2) extérieur de façon amovible au moyen d'un système de serrage (15) avec une pièce de serrage (16), et un deuxième adaptateur (20) étant maintenu de manière concentrique dans le premier raccordement d'outil (3) du premier adaptateur (10), et placé de manière rotative par rapport à celui-ci, le deuxième adaptateur (20) présentant un deuxième raccordement d'outil (25), lequel est placé de façon articulée sur le premier adaptateur (10) au moyen d'un élément de pivotement (30) autour d'un axe de pivotement (31) excentrique et parallèle aux axes d'entraînement concentriques (2, 4), **caractérisé en ce que** le deuxième raccordement d'outil (25) peut être entraîné, par l'intermédiaire du premier adaptateur (10), par l'arbre (2) extérieur concentrique, **et en ce que** les moyens pour pivoter l'élément de pivotement (30) comprennent le deuxième adaptateur (20) et un engrenage (21, 22, 23, 34), **et en ce que** le pivotement de l'élément de pivotement (31) peut être activé par une modification à court terme de la vitesse de rotation de l'arbre intérieur concentrique (2) par rapport à l'arbre extérieur concentrique (6).

2. Porte-outils selon la revendication 1, **caractérisé en ce que** le deuxième adaptateur (20) peut être raccordé à l'arbre d'entraînement concentrique intérieur (4) de l'entraînement d'outil.

3. Porte-outils selon la revendication 2, **caractérisé en ce que** des éléments de réglage sont placés sur le premier adaptateur (10) et des butées (35) sont placées sur l'élément de pivotement (31) pour limiter le pivotement de l'élément de pivotement (31).

4. Porte-outils selon la revendication 3, **caractérisé en ce que** le second raccordement d'outil (25) peut être actionné à l'aide du second adaptateur (20), par l'intermédiaire de l'engrenage (21, 22, 23, 34), par l'arbre concentrique intérieur (4).

5. Porte-outils selon la revendication 3, **caractérisé en ce que** les moyens pour pivoter l'élément de pivotement (31) comprennent le deuxième adaptateur (20) et les engrenages (21, 22, 23, 34).
